# EUROPÄISCHE PATENTSCHRIFT

(11) **EP 2 500 184 B1**
(45) Veröffentlichungstag und Bekanntmachung des Hinweises auf die Patenterteilung: **18.03.2015**
(21) Anmeldenummer: 11009878.7
(22) Anmeldetag: 15.12.2011
(51) Int. Cl.: B60B 35/06, B60B 35/00, B60G 9/00

(54) **Starrachsenanordnung in einem Fahrzeug, insbesondere in einem Nutzfahrzeug**
Fixed axle assembly in a vehicle, in particular in a vehicle, in particular a commercial vehicle
Agencement d'axe rigide dans un véhicule, notamment dans un véhicule utilitaire

(30) Priorität: 16.03.2011 DE 102011014106
(43) Veröffentlichungstag der Anmeldung: 19.09.2012
(73) Patentinhaber: MAN Truck & Bus AG, 80995 München (DE)
(72) Erfinder: Grötzinger, Josef, 84032 Altdorf (DE); Umling, Wilhelm, 85764 Oberschleißheim (DE); Wittmann, Thomas, 86368 Gersthofen (DE)

(56) Entgegenhaltungen:
- EP-A1- 0 914 976
- EP-A1- 1 120 299
- WO-A1-97/47484
- DE-A1- 3 725 102
- DE-A1- 19 920 670
- JP-A- 62 194 975

## Beschreibung

Die Erfindung betrifft eine Starrachsenanordnung in einem Fahrzeug, insbesondere in einem Nutzfahrzeug, nach dem Oberbegriff des Anspruchs 1.

DE 199 20 670 A1 offenbart die Merkmale des Oberbegriffs des Anspruchs 1. Zum Stand der Technik ist ferner auf die DE 37 25 102 A1, die WO 97/47484 A1 und die EP 0 914 976 A1 zu verweisen, die Achsenanordnungen für ein Fahrzeug beschreiben.

Aus der DE 103 33 760 A1 ist bereits eine Starrachse eines Fahrzeugs, insbesondere als liftbare Vor- oder Nachlaufachse eines Lastkraftwagens oder Omnibusses, bekannt. Der Achskörper dieser Starrachse ist hier in seinem Mittelteil nach unten ausgebuchtet und wird in diesem Bereich von einer zu einer benachbarten Achse führenden Antriebswelle mit Abstand überquert. Außerdem ist der Achskörper über untere Längsträger und einen oberen Dreieckslenker am Fahrgestellrahmen des Fahrzeugs angelenkt sowie über Federn und Dämpfer gegenüber letzterem abgestützt. Der Achskörper ist gebaut und setzt sich aus drei vorgefertigten Teilen zusammen, und zwar aus einem geschmiedeten oder gegossenen, nach Art eines Joches gebildeten Mittelteil und zwei durch Rohrstücke gebildeten Seitenteilen, die an den Enden des Mittelteils angeschweißt sind. Die zur Befestigung des Dreieckslenkers dienende Befestigungskonsole ragt vom Achskörper nach oben ab und ist an diesem in einem seitlichen, zur Längsmittenebene bzw. zum Längsmittenbereich des Achskörpers versetzten Mittelteilbereich angebunden. Die Antriebswelle verläuft seitlich versetzt zu dieser Befestigungskonsole in etwa in einem Längsmittenbereich des Achskörpers.

Mit einer derartig aufgebauten Starrachse lassen sich bereits eine Reihe von in der DE 103 33 760 A1 im Einzelnen aufgelisteten Vorteilen erzielen. Jedoch sind die Möglichkeit, die sich im Hinblick auf die konstruktive Anordnung des Dreieckslenkers und der Antriebswelle ergeben, beschränkt.

Ein weiterer Nachteil dieses Aufbaus kann darin gesehen werden, dass es hier aufgrund der Lage und Anordnung der Befestigungskonsole zu einer unsymmetrischen Krafteinleitung kommt, was wiederum eine unsymmetrische Kraftbeaufschlagung des Achskörpers bedeutet.

Demgegenüber ist es Aufgabe der vorliegenden Erfindung, eine Starrachsenanordnung in einem Fahrzeug, insbesondere in einem Nutzfahrzeug, zu schaffen, mittels der im Hinblick auf die Anordnung eines Mehrpunktlenkers und einer Antriebswelle mehr konstruktive Freiheiten zur Verfügung gestellt werden und mittels der eine optimierte Krafteinleitung möglich wird.

Diese Aufgabe wird gelöst mit den Merkmalen des Patentanspruchs 1. Vorteilhafte Ausgestaltungen sind Gegenstand der darauf rückbezogenen Unteransprüche.

Erfindungsgemäß ist eine Starrachsenanordnung in einem Fahrzeug, insbesondere in einem Nutzfahrzeug, mit einer Starrachse vorgesehen, die einen in Fahrzeugquerrichtung verlaufenden Achskörper aufweist, von dem eine Befestigungskonsole für einen Mehrpunktlenker nach oben abragt, wobei der Mehrpunktlenker mit seinen Lenkerarmen einerseits an einem, in Fahrzeughochachsenrichtung gesehen, beabstandet oberhalb des Achskörpers liegenden konsolenseitigen Mehrpunktlenker-Anbindungsbereich der Befestigungskonsole und andererseits an einem Rahmen des Fahrzeugs mittelbar oder unmittelbar gelenkig angebunden ist. Erfindungsgemäß ist der konsolenseitige Mehrpunktlenker-Anbindungsbereich beabstandet oberhalb eines, bezogen auf die Längserstreckungsrichtung des Achskörpers, Längsmittenbereichs des Achskörpers angeordnet, wobei von dem konsolenseitigen Mehrpunktlenker-Anbindungsbereich ausgehend jeweils wenigstens ein Konsolenarm nach unten zum Achskörper geführt und dort auf gegenüberliegenden Seiten des Längsmittenbereichs des Achskörpers an diesem angebunden ist. Der Längsmittenbereich ist hier bevorzugt durch eine den Achskörper in in etwa zwei gleich lange Achskörperhälften aufteilende Mittelachse definiert. Die ein- oder mehrteilig ausgebildete Befestigungskonsole, insbesondere eine ein- oder mehrteilig durch ein Blechbauteil gebildete Befestigungskonsole, bildet ein separates Bauteil, das mit dem Achskörper mittels wenigstens eines Befestigungsmittels verbunden ist, insbesondere stoff- und/oder kraft- und/oder formschlüssig.

Mit der erfindungsgemäßen Lösung, bei der sich der konsolenseitige Mehrpunktlenker-Anbindungsbereich beabstandet oberhalb des Längsmittenbereichs des Achskörpers befindet, von dem ausgehend mehrere Konsolenarme nach unten zum Achskörper geführt sind, kann zum einen die Krafteinleitung bevorzugt im Wesentlichen symmetrisch erfolgen und über die mehreren Konsolenarme in einer gewünschten Weise der Kraftfluss in den Achskörper aufgeteilt werden. Dadurch können die Konsolenarme insgesamt schlanker und mit geringeren Abmessungen aufgebaut werden, als dies bei einer einarmigen Befestigungskonsole z. B. gemäß der DE 103 33 760 A1 der Fall ist.

Ein weiterer wesentlicher Vorteil der erfindungsgemäßen Lösung liegt darin, dass durch diese längsmittenbereichseitige bzw. längsmittenebenenseitige Anordnung des konsolenseitigen Mehrpunktlenker-Anbindungsbereiches mitsamt dem von diesen nach unten geführten Konsolenarmen ein Aufbau geschaffen werden kann, bei dem der längsmittenbereichseitige Bereich oberhalb des Achskörpers unverbaut bleibt, so dass sich hier erhebliche konstruktive Freiheitsgrade in Verbindung mit einer Anordnung einer zu einer Antriebsachse des Fahrzeugs, insbesondere zu einer der Starrachse benachbarten Antriebsachse des Fahrzeugs, geführten und die Starrachse bzw. den Achskörper querenden Antriebswelle ergeben. Dementsprechend ist somit im Bereich zwischen den Konsolenarmen und dem Achskörper ein Freiraum ausgebildet, in dem eine in Fahrzeuglängsrichtung verlaufende und den Achskörper querende Antriebswelle des Fahrzeugs angeordnet ist. Besonders bevorzugt ist hierbei eine Ausgestaltung, bei der die Befestigungskonsole eine U- oder V-Form mit im Bereich der U- oder V-Basis angeordnetem und/oder ausgebildetem Mehrpunktlenker-Anbindungsbereich aufweist, von welcher Basis ausgehend die die U- oder V-Schenkel ausbildenden Konsolenarme dergestalt nach unten zum Achskörper geführt sind, dass die Befestigungskonsole und der Achskörper den Freiraum zur Anordnung der Antriebswelle ringförmig umgrenzen. Mit einer derartigen konstruktiven Lösung können die Konsolenarme somit vom mittelachsen- bzw. längsmittenbereichseitigen Mehrpunktlenker-Anbindungsbereich aus gesehen in Richtung von der Mittelachse bzw. vom Längsmittenbereich weg nach außen an den Achskörper geführt werden, um einen größtmöglichen Freiraum zur Anordnung der Antriebswelle auszubilden. Dieser Freiraum zur Anordnung der Antriebswelle kann zusätzlich noch dadurch erhöht werden, dass die Konsolenarme von der Mittelachse bzw. vom Längsmittenbereich des Achskörpers weg nach außen gekrümmt sind.

Gemäß einer weiteren besonders bevorzugten erfindungsgemäßen Ausgestaltung kann der Achskörper in einem den Längsmittenbereich aufweisenden Achskörper-Mittelteil zudem mit einem Ausbuchtbereich versehen sein, vorzugsweise in Fahrzeughochachsenrichtung gesehen nach unten ausgebuchtet sein, wobei der Achskörper mit einem sich zu beiden Seiten des Ausbuchtbereichs anschließenden Achskörper-Übergangsbereich, insbesondere mit einem schräg oder gekrümmt mit Bezug zu der Fahrzeughochachsenrichtung und der Fahrzeugquerrichtung verlaufenden Achskörper-Übergangsbereich, in die Achskörper-Seitenteile übergeht. Wie bereits zuvor dargestellt, wird dadurch neben einer vorteilhaften im Wesentlichen symmetrischen Krafteinleitung in den Achskörper, wodurch die Befestigungskonsole insgesamt hinsichtlich der Konsolenarme relativ schlank und schmalbauend dimensioniert werden kann, zugleich ein erheblicher Freiraum oberhalb des längsmittenbereichseitigen Achskörperbereichs zur Verfügung gestellt, in dem die Antriebswelle auf unterschiedlichste Art und Weise angeordnet werden kann, so dass ein

derartiger Aufbau einer Starrachsenanordnung in einer Vielzahl von konkreten Fahrzeugaufbauten eingesetzt werden kann.

In diesem Zusammenhang ist es weiter vorteilhaft, dass die Konsolenarme vom Mehrpunktlenker-Anbindungsbereich ausgehend unter einem definierten Winkel nach schräg außen, vom Längsmittenbereich des Achskörpers weg, zum Achskörper geführt sind, und zwar bevorzugt dergestalt, dass die Konsolenarme auf den gegenüberliegenden Seiten des Längsmittenbereichs im Achskörper-Übergangsbereich vom Achskörper-Mittelteil in die Achskörper-Seitenteile angebunden sind. Auch eine Anbindung im Bereich der sich an die Achskörper-Übergangsbereich in Fahrzeugquerrichtung nach außen hin anschließenden Achskörper-Seitenteile ist grundsätzlich möglich und denkbar.

Die Befestigungskonsole selbst ist ein- oder mehrteilig ausgebildet, wobei die Befestigungskonsole bevorzugt durch ein ein- oder mehrteilig ausgebildetes Blechbauteil gebildet ist, das neben einer einfachen Herstellbarkeit auch eine hohe Festigkeit aufweist. Die Befestigungskonsole ist somit durch ein separates Bauteil gebildet, das mit dem Achskörper mittels wenigstens eines Befestigungsmittels verbunden ist, insbesondere stoff- und/oder kraft- und/oder formschlüssig verbunden ist. Obwohl grundsätzlich auch eine integrale Ausgestaltung der Befestigungskonsole und insbesondere der Konsolenarme mit dem Achskörper möglich ist, ergeben sich in Verbindung mit einer durch ein separates Bauteil gebildeten Befestigungskonsole wiederum herstellungstechnische und montagetechnische Freiheitsgrade.

Besonders bevorzugt ist eine Ausgestaltung, bei der die Konsolenarme mit ihren achskörperseitigen Anbindungsbereichen, insbesondere mit ihren freien Enden, wenigstens in Teilbereichen der Formgebung und/oder der Kontur der Achskörper-Übergangsbereiche folgen und dort in einer flächigen Anlageverbindung anliegen und angebunden sind. Dadurch lässt sich eine flächige stabile Anbindung der Konsolenarme über einen relativ großen Konsolenarmbereich sicherstellen, der hervorragend geeignet ist, um die über den Mehrpunktlenker-Anbindungsbereich eingeleiteten Kräfte funktionssicher in den Achskörper einzuleiten. Beispielsweise können die Konsolenarme hier vom Mehrpunktlenker-Anbindungsbereich ausgehend so vom Längsmittenbereich weg nach außen zum an die Achskörper-Seitenteile angrenzenden Bereich des jeweiligen Achskörper- Übergangsbereichs bzw. gegebenenfalls auch zu den Achskörper-Seitenteilen geführt sein, dass der Freiraum zur Anordnung der Antriebswelle oberhalb des Achskörpers so groß als möglich ausgebildet wird, während die am Achskörper, zum Beispiel am Achskörper-Übergangsbereich anliegenden freien Enden der Konsolenarme dann im Bereich außerhalb des Freiraums wieder gegebenenfalls so abgebogen werden, dass sie in einer flächigen Anlageverbindung dem Achskörper folgen, zum Beispiel dem Achskörper-Übergangsbereich in Richtung zur Längsmitte hin folgen, das heißt das diese somit zum Beispiel wieder in Richtung zum Längsmittenbereich des Achskörpers abgebogen sein können, weil dies keinerlei Auswirkungen auf die Freiraumausbildung hat.

Der konsolenseitige Mehrpunktlenker-Anbindungsbereich kann integral mit der Befestigungskonsole ausgebildet sein oder durch ein separates Bauteil gebildet sein, das mit den Konsolenarmen fest verbunden ist, insbesondere stoff- und/oder kraft- und/oder formschlüssig verbunden ist. Auch hier ergeben sich wiederum mit der Ausbildung des Mehrpunktlenker-Anbindungsbereiches durch ein separates Bauteil konstruktive Freiheiten, wenngleich die integrale Lösung grundsätzlich auch möglich ist und gegebenenfalls den Montageaufwand reduziert.

Gemäß einer besonders bevorzugten konkreten Ausgestaltung ist vorgesehen, dass der konsolenseitige Mehrpunktlenker-Anbindungsbereich wenigstens ein Anschlusselement, insbesondere wenigstens eine Anschlusspratze, für wenigstens ein Lenkerlager, insbesondere ein Elastomer-Metall-Lager, aufweist und/oder trägt. Dadurch wird ein einfacher Anschluss eines Lenkerlagers möglich. Besonders bevorzugt ist hierbei ein konkreter Aufbau, bei dem der konsolenseitige Mehrpunktlenker-Anbindungsbereich einen plattenartigen Trägerbereich aufweist, auf dem das wenigstens eine Anschlusselement, insbesondere die wenigstens eine Anschlusspratze, angeordnet ist, wobei die Konsolenarme von der Trägerplatte ausgehen und mit dieser fest verbunden sind. Mit einem derartigen plattenartigen Trägerbereich ergibt sich zum einen eine vorteilhafte funktionssichere Anbindungsmöglichkeit der Konsolenarme und zudem auch eine einfache Anordnungsmöglichkeit des wenigstens einen Lenkerlagers bzw. Anschlusselementes.

Für den Fall eines Dreipunktlenkers als Mehrpunktlenker ist der konsolenseitige Mehrpunktlenker-Anbindungsbereich bevorzugt so ausgebildet, dass der einzige Lenkeranbindungspunkt im Längsmittenbereich der Befestigungskonsole liegt. Dadurch ergibt sich, insbesondere in Verbindung mit einer im Wesentlichen symmetrischen und/oder im Wesentlichen durch Gleichteile ausgebildeten Ausführung bzw. Anordnung der Konsolenarme der Befestigungskonsole eine symmetrische Krafteinleitung und Kraftverteilung der in den Achskörper eingeleiteten Kräfte.

Im Falle eines Vierpunktlenkers als Mehrpunktlenker ist der konsolenseitige Mehrpunktlenker-Anbindungsbereich bevorzugt so ausgebildet, dass die zwei konsolenseitigen Lenkeranbindungspunkte im Wesentlichen symmetrisch bezüglich des Längsmittenbereiches des Achskörpers angeordnet sind. Auch hierdurch ist dann, insbesondere in Verbindung mit im Wesentlichen symmetrisch und/oder im Wesentlichen als Gleichteile ausgebildeten Konsolenarmen der Befestigungskonsole eine im Wesentlichen symmetrische Krafteinleitung in den Achskörper sichergestellt.

Dieser Achskörper ist bevorzugt ein gebauter Achskörper, bei dem das die Achskörper-Übergangsbereiche aufweisende Achskörper-Mitteilteil als separates Bauteil hergestellt ist und mit den ebenfalls durch separate Bauteile hergestellten Achskörper-Seitenteilen verbunden ist.

Gemäß einer weiteren bevorzugten konkreten Ausgestaltung kann die Starrachse zum Beispiel eine einer Antriebsachse vorgelagerte Vorlaufachse oder eine einer Antriebsachse nachgeordneten Nachlaufachse eines Nutzfahrzeuges, insbesondere eines Lastkraftwagens oder eines Omnibusses sein. Ebenso gut kann die Starrachse auch als Liftachse ausgebildet sein, wobei dann an der Befestigungskonsole gegebenenfalls auch noch weitere Bauteile zum Anheben und Senken der Starrachse angeordnet sein können.

Die Erfindung betrifft weiter eine Befestigungskonsole für eine Starrachsenanordnung nach einem der vorhergehenden Ansprüche mit einer einen Mehrpunktlenker-Anbindungsbereich aufweisenden Befestigungskonsole, von der mehrere Konsolenarme abragen. Die sich hierdurch und in Verbindung mit konkreten Ausgestaltungen hierzu ergebenden Vorteile wurden bereits zuvor in Verbindung mit der erfindungsgemäßen Starrachsenanordnung näher erläutert. Insofern wird auf die zuvor gemachten Ausführungen verwiesen.

Die Erfindung wird nachfolgend anhand einer Zeichnung näher erläutert.

Es zeigen:

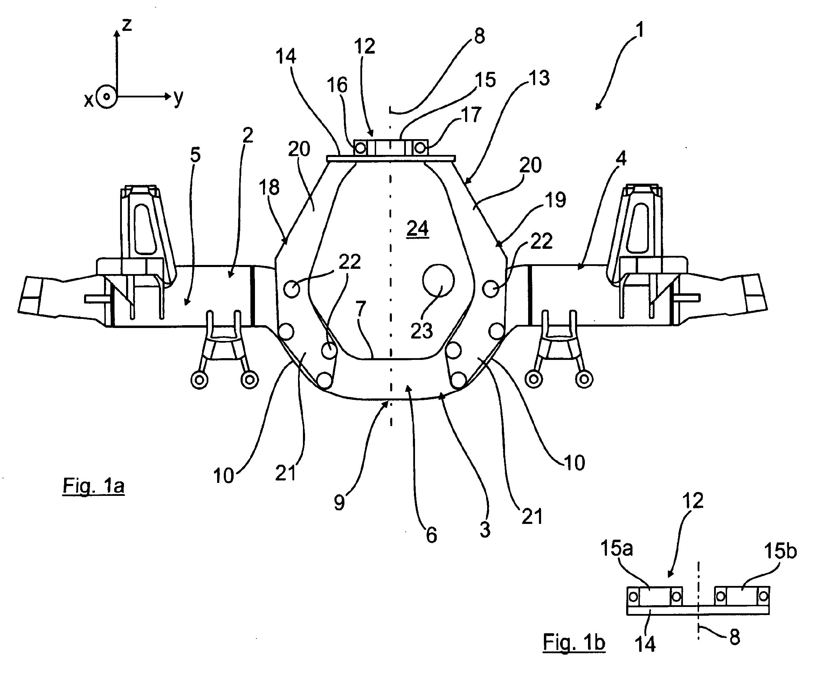

- Fig. 1a: schematisch eine beispielhafte Ausbildung einer erfindungsgemäßen Starrachsenanordnung mit einer Befestigungskonsole zur Anbindung eines Dreipunktlenkers, und
- Fig. 1b: schematisch eine prinzipielle Darstellung eines Mehrpunktlenker-Anbindungsbereiches für einen Vierpunktlenker.

Die Figur 1a zeigt eine Starrachse 1 mit einem gebauten Achskörper 2, der ein Achskörper-Mittelteil 3 sowie daran angebundene, insbesondere angeschweißte oder angeflanschte Achskörper-Seitenteile 4, 5 aufweist. Die einzelnen Achskörper-Bauteile können dabei entsprechend der Ausgestaltung der DE 103 33 760 A1 ausgebildet sein.

Der Achskörper 2 ist im Bereich des Achskörper-Mittelteils 3 mit einem Ausbuchtbereich 6 versehen, wobei die Ausbuchtung 7 in Fahrzeughochachsenrichtung z gesehen nach unten gerichtet ist.

Wie dies der Figur 1a weiter zu entnehmen ist, verläuft der Ausbuchtbereich 6 des Achskörper-Mittelteils 3 zu beiden Seiten des durch die Mittelachse 8 definierten Längsmittenbereich 9 des Achskörpers 2 in etwa horizontal und erstreckt sich somit im Wesentlichen in Fahrzeugquerachsenrichtung y. An diesen Ausbuchtbereich 6 schließen sich schräg bzw. gekrümmt mit Bezug zu der Fahrzeughochachsenrichtung z und der Fahrzeugquerrichtung y verlaufende Achskörper-Übergangsbereiche 10, 11 an, und zwar auf beiden Seiten des Längsmittenbereichs 9, welche Achskörper-Übergangsbereiche 10 in die Seitenteile 3, 4 übergehen.

Wie dies aus der Figur 1a weiter ersichtlich ist, ist ein Mehrpunktlenker-Anbindungsbereich 12 einer Befestigungskonsole 13 hier beabstandet oberhalb des durch die Mittelachse 8 definierten Längsmittenbereichs 9 des Achskörper-Mittelteils 3 angeordnet. Dieser Mehrpunktlenker-Anbindungsbereich 12 ist hier beispielhaft durch eine eine Anschlusspratze 15 tragende Trägerplatte 14 gebildet, wobei die Anschlusspratze 15 hinsichtlich ihrer Anbindungspunkte 16, 17 symmetrisch zur Mittelachse 8 angeordnet ist, so dass die Mittelachse 8 zum Beispiel genau durch die Längsmitte des Mehrpunktlenker-Anbindungsbereiches 12 verläuft. Im Falle der Anbindung eines Vierpunktlenkers kann der Mehrpunktlenker-Anbindungsbereich zwei Anschlusspratzen 15a, 15b aufweisen (Figur 1b), die analog zur Ausgestaltung nach Figur 1a symmetrisch mit Bezug zur Mittelachse 8 angeordnet sind, um eine symmetrische Krafteinleitung zu ermöglichen. Die an der Trägerplatte 14 angebundenen, zum Beispiel angeschweißten Konsolenarme sind in der Figur 1b aus Übersichtlichkeitsgründen nicht mit dargestellt.

Die Trägerplatte 14 des Mehrpunktlenker-Anbindungsbereiches, die beabstandet oberhalb des Längsmittenbereichs 9 des Achskörpers 2 der Starrachse 1 angeordnet ist, ist weiter mit zwei Konsolenarmen 18, 19 fest verbunden, zum Beispiel verschweißt, welche Konsolenarme 18, 19 ebenfalls Bestandteil der erfindungsgemäßen Befestigungskonsole 13 bilden. Konkret sind hier die Konsolenarme 18, 19, bezogen wiederum auf die Mittelachse 8 bzw. den Längsmittenbereich 9 des Achskörpers 2, als im Wesentlichen symmetrische Gleichteile ausgebildet, die mit einem ersten, oberhalb des Achskörpers 2 verlaufenden Teilbereich 20 vom Längsmittenbereich 9 bzw. der Mittelachse 8 weg nach schräg außen zu den Achskörper-Übergangsbereichen 10, 11 geführt sind, wo die Konsolenarme 18, 19 mit einem zweiten Teilbereich 21, der sich an den ersten Teilbereich 20 anschließt, wiederum nach innen zum Längsmittenbereich 9 des Achskörpers 2 hin abgebogen sind und dem Verlauf des Achskörper-Übergangsbereiches 10 bzw. 11 so folgen, dass diese dort in einer flächigen Anlageverbindung anliegen. Die beiden Konsolenarme 18, 19 sind schließlich im Bereich der Achskörper-Übergangsbereiche 10, 11 mittels mehrerer zum Beispiel Schraubverbindungen 22 festgelegt, die hier lediglich äußerst schematisch dargestellt sind.

Dadurch ergibt sich eine stabile Anbindung der Konsolenarme 18, 19 und damit der Befestigungskonsole 13 am Achskörper. Die abgewinkelten zweiten Teilbereiche 21 der Konsolenarme 18, 19 erstrecken sich dabei in etwa bis zum Ausbuchtbereich 6.

Mit einem derartigen U-förmigen Aufbau der Befestigungskonsole 13 wird ein relativ großräumiger, ringförmig umschlossener Freiraum 24 zwischen den Konsolenarmen 18, 19, dem Achskörper 2 und dem Mehrpunktlenker-Anbindungsbereich 12 geschaffen, mit dem sich erhebliche konstruktive Freiheitsgrade im Hinblick auf die Anordnung einer den Achskörper 2 querenden Antriebswelle 23 ergeben, die in Fahrzeuglängsrichtung x verlaufend zu einer benachbarten Antriebsachse geführt ist. So kann die Antriebswelle 23, wie dargestellt nunmehr im Gegensatz zum Stand der Technik der DE 103 33 760 A1 nicht nur auf einer Seite des Längsmittenbereichs 9 des Achskörpers 2 angeordnet werden, sondern auch auf der gegenüberliegenden Seite dieses Längsmittenbereiches 9, so dass ein derartiger Aufbau der Starrachse 1 bzw. der Befestigungskonsole 13 für eine Vielzahl von Anwendungsfällen geeignet ist.

Kommt es nunmehr im Bereich eines hier nicht dargestellten und im Bereich der Anschlusspratze 15 mittels eines Elastomer-Metall-Lagers angelenkten Dreipunktlenkers zu einer Kraftbeaufschlagung der Befestigungskonsole 13, wird diese Kraft entsprechend aufgeteilt auf die Konsolenarme 18, 19 nach unten in den Bereich der Achskörper-Übergangsbereiche 10, 11 eingeleitet, von wo aus dann ein weiterer Kraftabfluss in den Bereich der Seitenteile 4 bzw. auch in den stabilen Ausbuchtbereich 6 erfolgen kann. Damit können Kraftspitzen vorteilhaft abgebaut werden und ergibt sich eine besonders bevorzugte symmetrische Krafteinleitung in den Achskörper 2 der Starrachse 1.

### Bezugszeichenliste

- 1: Starrachse
- 2: Achskörper
- 3: Mittelteil
- 4: Seitenteil
- 5: Seitenteil
- 6: Ausbuchtbereich
- 7: Ausbuchtung
- 8: Mittelachse
- 9: Längsmittenbereich
- 10: Achskörper-Übergangsbereich
- 11: Achskörper-Übergangsbereich
- 12: Mehrpunktlenker-Anbindungsbereich
- 13: Befestigungskonsole
- 14: Trägerplatte
- 15: Anschlusspratze
- 16: Anbindungspunkt
- 17: Anbindungspunkt
- 18: Konsolenarm
- 19: Konsolenarm
- 20: erster Teilbereich
- 21: zweiter Teilbereich
- 22: Schraubverbindungen
- 23: Antriebswelle
- 24: Freiraum

## Patentansprüche

1. Starrachsenanordnung in einem Fahrzeug, insbesondere in einem Nutzfahrzeug,
mit einer Starrachse (1), die einen in Fahrzeugquerrichtung verlaufenden Achskörper (2) aufweist, von dem eine Befestigungskonsole (13) für einen Mehrpunktlenker nach oben abragt, wobei der Mehrpunktlenker mit seinen Lenkerarmen einerseits an einem, in Fahrzeughochachsenrichtung (Z) gesehen, beabstandet oberhalb des Achskörpers (2) liegenden konsolenseitigen Mehrpunktlenker-Anbindungsbereich (12) der Befestigungskonsole (13) und andererseits an einem Rahmen des Fahrzeugs mittelbar oder unmittelbar gelenkig angebunden ist,
wobei der konsolenseitige Mehrpunktlenker-Anbindungsbereich (12) beabstandet oberhalb eines, bezogen auf die Längserstreckungsrichtung des Achskörpers (2), Längsmittenbereichs (9) des Achskörpers (2) angeordnet ist, wobei von dem konsolenseitigen Mehrpunktlenker-Anbindungsbereich (12) ausgehend jeweils wenigstens ein Konsolenarm (18, 19) nach unten zum Achskörper (2) geführt und dort auf gegenüberliegenden Seiten des Längsmittenbereichs (9) des Achskörpers (2) an diesem angebunden ist,
**dadurch gekennzeichnet,**
**dass** die ein- oder mehrteilig ausgebildete Befestigungskonsole (13), insbesondere eine ein- oder mehrteilig durch ein Blechbauteil gebildete Befestigungskonsole (13), ein separates Bauteil bildet, das mit dem Achskörper (2) mittels wenigstens eines Befestigungsmittels (22) verbunden ist, insbesondere stoff- und/oder kraft- und/oder formschlüssig verbunden ist.

2. Starrachsenanordnung nach Anspruch 1, **dadurch gekennzeichnet, dass** im Bereich zwischen den Konsolenarmen (18, 19) und dem Achskörper (2) ein Freiraum (24) ausgebildet ist, in dem eine die Starrachse (1) bzw. den Achskörper (2) querende und/oder in Fahrzeuglängsrichtung verlaufende Antriebswelle (23) des Fahrzeugs angeordnet ist.

3. Starrachsenanordnung nach Anspruch 2, **dadurch gekennzeichnet, dass** die Befestigungskonsole (13) eine U- oder V-Form mit im Bereich der U- oder V-Basis angeordnetem und/oder ausgebildetem Mehrpunktlenker-Anbindungsbereich (12) aufweist, von welcher Basis ausgehend die die U- oder V- Schenkel ausbildenden
Konsolenarme (18, 19) dergestalt nach unten zum Achskörper (2) geführt sind, dass die Befestigungskonsole (13) mitsamt Achskörper (2) den Freiraum (24) zur Anordnung der Antriebswelle (23) ringförmig umgrenzen.

4. Starrachsenanordnung nach einem der vorhergehenden Ansprüche, **dadurch gekennzeichnet, dass** die Konsolenarme (18, 19) vom Längsmittenbereich (9) des Achskörpers (2) weg nach außen gekrümmt sind.

5. Starrachsenanordnung nach einem der vorhergehenden Ansprüche, **dadurch gekennzeichnet,**
**dass** der Achskörper (2) in einem den Längsmittenbereich (9) aufweisenden Achskörper-Mittelteil (3) mit einem Ausbuchtbereich (6) versehen ist, vorzugsweise in Fahrzeughochachsenrichtung gesehen nach unten ausgebuchtet ist, und
**dass** der Achskörper (2) mit einem sich zu beiden Seiten des Ausbuchtbereichs (6) anschließenden Achskörper-Übergangsbereich (10, 11), insbesondere mit einem schräg oder gekrümmt mit Bezug zu der Fahrzeughochachsenrichtung und der Fahrzeugquerrichtung verlaufenden Achskörper-Übergangsbereich (10, 11), in die Achskörper-Seitenteile (4, 5) übergeht.

6. Starrachsenanordnung nach einem der vorhergehenden Ansprüche, **dadurch gekennzeichnet, dass** die Konsolenarme (18, 19) vom Mehrpunktlenker-Anbindungsbereich (12) ausgehend unter einem definierten Winkel nach schräg außen, vom Längsmittenbereich (9) des Achskörpers (2) weg, zum Achskörper (2) geführt sind.

7. Starrachsenanordnung nach Anspruch 5 und 6, **dadurch gekennzeichnet, dass** die Konsolenarme auf den gegenüberliegenden Seiten des Längsmittenbereichs (9) an dem jeweiligen Achskörper-Seitenteil (4, 5) und/oder im Achskörper-Übergangsbereich (10, 11) vom Achskörper-Mittelteil (3) in die Achskörper-Seitenteile (4, 5) angebunden sind.

8. Starrachsenanordnung nach einem der vorhergehenden Ansprüche, **dadurch gekennzeichnet, dass** die Konsolenarme (18, 19) mit ihren achskörperseitigen Anbindungsbereichen, insbesondere mit ihren freien Enden, wenigstens in Teilbereichen der Formgebung und/oder der Kontur des Achskörpers (2), insbesondere der Achskörper-Seitenteile (4, 5) und/oder der Achskörper-übergangsbereiche (10, 11), folgen und dort in einer flächigen Anlageverbindung anliegen und angebunden sind.

9. Starrachsenanordnung nach einem der vorhergehenden Ansprüche, **dadurch gekennzeichnet, dass** der konsolenseitige Mehrpunktlenker-Anbindungsbereich (12) integral mit der Befestigungskonsole (13) ausgebildet ist oder durch ein separates Bauteil gebildet ist, das mit den Konsolenarmen (18, 19) fest verbunden ist, insbesondere stoff- und/oder kraft- und/oder formschlüssig verbunden ist.

10. Starrachsenanordnung nach einem der vorhergehenden Ansprüche, **dadurch gekennzeichnet, dass** der konsolenseitige Mehrpunktlenker-Anbindungsbereich (12) wenigstens ein Anschlusselement, insbesondere wenigstens eine Anschlusspratze (15), für wenigstens ein Lenkerlager, insbesondere ein Eiastomer-Metall-Lager, aufweist und/oder trägt.

11. Starrachsenanordnung nach Anspruch 9 und 10, **dadurch gekennzeichnet, dass** der konsolenseitige Mehrpunktlenker-Anbindungsbereich (12) einen plattenartigen Trägerbereich (14) aufweist, auf dem das wenigstens eine Anschlusselement (15), insbesondere die wenigstens eine Anschlusspratze, angeordnet ist, wobei die Konsolenarme (18, 19) von dem Trägerbereich (14), insbesondere einer Trägerplatte, ausgehen und mit dieser fest verbunden sind.

12. Starrachsenanordnung nach einem der vorhergehenden Ansprüche, **dadurch gekennzeichnet, dass** der konsolenseitige Mehrpunktlenker-Anbindungsbereich (12) im Falle eines Dreipunktlenkers als Mehrpunktlenker so ausgebildet ist, dass der einzige Lenkeranbindungspunkt im Längsmittenbereich (9) der Befestigungskonsole (13) liegt.

13. Starrachsenanordnung nach einem der vorhergehenden Ansprüche, **dadurch gekennzeichnet, dass** der konsolenseitige Mehrpunktlenker-Anbindungsbereich (12) im Falle eines Vierpunktlenkers als Mehrpunktlenker so ausgebildet ist, dass die, bevorzugt durch zwei beabstandete Anschlusselemente bzw. Anschlusspratzen gebildeten zwei konsolenseitigen Lenkeranbindungspunkte symmetrisch bezüglich des Längsmittenbereiches (9) angeordnet sind.

14. Starrachsenanordnung nach einem der vorhergehenden Ansprüche, **dadurch gekennzeichnet, dass** die Konsolenarme (18, 19) der Befestigungskonsole (13) bezüglich des Längsmittenbereiches (9) im Wesentlichen symmetrisch und/oder im Wesentlichen als Gleichteile ausgebildet sind.

15. Starrachsenanordnung nach einem der Ansprüche 4 bis 14, **dadurch gekennzeichnet, dass** der Achskörper (2) ein gebauter Achskörper (2) ist, bei dem das die Achskörper-Übergangsbereiche (10, 11) aufweisende Achskörper-Mittelteil (3) als separates Bauteil hergestellt ist und mit den ebenfalls durch separate Bauteile hergestellten Achskörper-Seitenteilen (4, 5) verbunden ist.

16. Starrachsenanordnung nach einem der vorhergehenden Ansprüche, **dadurch gekennzeichnet, dass** die gegebenenfalls als Liftachse ausgebildete Starrachse (1) eine einer Antriebsachse vorgelagerte Vorlaufachse oder eine einer Antriebsachse nachgeordnete Nachlaufachse eines Nutzfahrzeuges, insbesondere eine Lastkraftwagens oder eines Omnibusses ist.

17. Befestigungskonsole für eine Starrachsenanordnung nach einem der vorhergehenden Ansprüche.

## Claims

1. Rigid axle arrangement in a vehicle, in particular a commercial vehicle,
comprising a rigid axle (1) having an axle body (2) disposed in the vehicle transverse direction, from which axle body a fastening bracket (13) for a multi-point link projects upwardly, the multi-point link being indirectly or directly articulated by its link arms on one side to a multi-point link attachment region (12) of the fastening bracket (13) on the bracket side located at a distance above the axle body (2), viewed in the direction of the vehicle vertical axis (Z), and on the other side to a frame of the vehicle, the multi-point link attachment region (12) on the bracket side being arranged at a distance above a longitudinally central region (9) of the axle body (2), in relation to the direction of longitudinal extent of the axle body (2), at least one bracket arm (18, 19) in each case extending downwardly to the axle body (2), starting from the multi-point link attachment region (12) on the bracket side, and being attached to the axle body (2) on opposite sides of the longitudinally central region (9) thereof,
**characterized in that**
the one-piece or multi-piece fastening bracket (13), in particular a one-piece or multi-piece fastening bracket (13) formed by a sheet metal component, forms a separate component which is connected to the axle body (2) by means of at least one fastening means (22), in particular by a maternal and/or nonpositive and/or positive joint.

2. Rigid axle arrangement according to Claim 1, **characterized in that** a clear space (24) is formed in the region between the bracket arms (18, 19) and the axle body (2), in which clear space a drive shaft (23) of the vehicle is arranged, which drive shaft (23) crosses the rigid axle (1) or the axle body (2) and/or is disposed in the vehicle longitudinal direction.

3. Rigid axle arrangement according to Claim 2, **characterized in that** the fastening bracket (13) is U-shaped or V-shaped with a multi-point link attachment region (12) arranged and/or formed in the region of the base of the U or the V, starting from which base the bracket arms (18, 19) forming the sides of the U or the V extend downwardly to the axle body (2) in such a way that the fastening bracket (13) together with the axle body (2) annularly delimit the clear space (24) in which the drive shaft (23) is to be arranged.

4. Rigid axle arrangement according to any one of the preceding claims, **characterized in that** the bracket arms (18, 19) are curved outwardly away from the longitudinally central region (9) of the axle body (2).

5. Rigid axle arrangement according to any one of the preceding claims, **characterized in that**
the axle body (2) is provided, in an axle body central section (3) containing the longitudinally central region (9), with a U-shaped region (6) which is preferably curved downwardly, viewed in the direction of the vehicle vertical axis, and **in that**
the axle body (2) merges into the axle body side sections (4, 5) via an axle body transitional region (10, 11) adjoining the U-shaped region (6) on each side, in particular via an axle body transitional region (10, 11) which is disposed obliquely or in a curved manner with respect to the direction of the vehicle vertical axis and to the vehicle transverse direction.

6. Rigid axle arrangement according to any one of the preceding claims, **characterized in that**, starting from the multi-point link attachment region (12), the bracket arms (18, 19) of the multi-point link attachment region (12) extend to the axle body (2) obliquely outwards at a defined angle away from the longitudinally central region (9) of the axle body (2).

7. Rigid axle arrangement according to Claims 5 and 6, **characterized in that** the bracket arms are attached to the respective axle body side sections (4, 5) and/or to the axle body transitional region (10, 11) leading from the axle body central section (3) to the axle body side sections (4, 5).

8. Rigid axle arrangement according to any one of the preceding claims, **characterized in that** the attachment regions of the bracket arms (18, 19) on the axle body side, in particular the free ends thereof, follow the shape and/or the contour of the axle body (2), in particular of the axle body side sections (4, 5) and/or of the axle body transitional regions (10, 11), aL least in partial regions, where they fit against and are attached to said regions in a planar abutment joint.

9. Rigid axle arrangement according to any one of the preceding claims, **characterized in that** the multi-point link attachment region (12) on the bracket side is formed integrally with the fastening bracket (13) or is formed by a separate component which is rigidly connected to the bracket arms (18, 19), in particular by a material and/or nonpositive and/or positive joint.

10. Rigid axle arrangement according to any one of the preceding claims, **characterized in that** the multi-point link attachment region (12) on the bracket side has and/or carries at least one connecting element, in particular at least one connecting claw (15), for at least one link bearing, in particular an elastomer-metal bearing.

11. Rigid axle arrangement according to Claims 9 and 10, **characterized in that** the multi-point link attachment region (12) on the bracket side has a plate-like support region (14) on which the at least one connecting element (15), in particular the at least one connecting claw, is arranged, the bracket arms (18, 19) starting from and being rigidly connected to the support region (14), in particular a support plate.

12. Rigid axle arrangement according to any one of the preceding claims, **characterized in that**, in the case of a three-point link as the multi-point link, the multi-point link attachment region (12) on the bracket side is configured in such a way that the single link attachment point is located in the longitudinally central region (9) of the fastening bracket (13).

13. Rigid axle arrangement according to any one of the preceding claims, **characterized in that**, in the case of a four-point link as the multi-point link, the multi-point link attachment region (12) on the bracket side is configured in such a way that the two link attachment points on the bracket side, preferably formed by two connecting elements or connecting claws spacad from one another, are arranged symmetrically with respect to the longitudinally central region (9).

14. Rigid axle arrangement according to any one of the preceding claims, **characterized in that** the bracket arms (18, 19) of the fastening bracket (13) are configured substantially symmetrically, and/or as substantially identical parts, with respect to the longitudinally central region (9).

15. Rigid axle arrangement according to any one of Claims 4 to 14, **characterized in that** the axle body (2) is a built-up axle body (2) in which the axle body central section (3) including the axle body transitional regions (10, 11) is produced as a separate component and is connected to the axle body side sections (4, 5) which are also produced as separate components.

16. Rigid axle arrangement according to any one of the preceding claims, **characterized in that** the rigid axle (1), which is optionally configured as a lift axle, is a leading axle positioned ahead of a drive axle or a trailing axle arranged behind a drive axle of a commercial vehicle, in particular a heavy goods vehicle or a bus.

17. Fastening bracket for a rigid axle arrangement according to any one of the preceding claims.

## Revendications

1. Agencement d'essieu rigide dans un véhicule, en particulier dans un véhicule utilitaire,
comprenant un essieu rigide (1) qui comprend un corps d'essieu (2) s'étendant dans la direction transversale du véhicule, à partir duquel corps d'essieu fait saillie vers le haut une console de fixation (13) pour un bras oscillant à plusieurs points, le bras oscillant à plusieurs points étant connecté de manière articulée directement ou indirectement, par ses bras de suspension, d'une part à une région de connexion de bras oscillant à plusieurs points (12) de la console de fixation: (13) située du côté de la console et située de manière espacée au-dessus du corps d'essieu (2), vue dans la direction de l'axe vertical du véhicule (2), et d'autre part à un châssis du véhicule,
la région de connexion de bras oscillant à plusieurs points (12) située du côté de la console étant disposée de manière espacée au-dessus d'une région centrale longitudinale (9) du corps d'essieu (2), par rapport à la direction d'étendue longitudinale du corps d'essieu (2), à chaque fois au moins un bras de console (18, 19) menant vers le bas jusqu'au corps d'essieu (2) à partir de la région de connexion de bras oscillant à plusieurs points (12) située du côté de la console et y étant connecté au corps d'essieu sur des côtés opposés de la région centrale longitudinale (9) du corps d'essieu (2),
**caractérisé en ce que**
la console de fixation (13) réalisée en une ou plusieurs parties, en particulier une console de fixation (13) formée en une ou plusieurs parties par un composant en tôle, forme un composant séparé qui est relié, en particulier relié par liaison de matière et/ou par force et/ou par engagement par complémentarité de formes, au corps d'essieu (2) au moyen d'au moins un moyen de fixation (22).

2. Agencement d'essieu rigide selon la revendication 1, **caractérisé en ce qu'**un espace libre (24) est réalisé dans la région entre les bras de console (18, 19) et le corps d'essieu (2), dans lequel espace libre est disposé un arbre d'entraînement (23) du véhicule traversant l'essieu rigide (1) ou le corps d'essieu (2) et/ou s'étendant dans la direction longitudinale du véhicule.

3. Agencement d'essieu rigide selon la revendication 2, **caractérisé en ce que** la console de fixation (13) présente une forme en U ou en V avec une région de connexion de bras oscillant à plusieurs points (12) disposée et/ou réalisée dans la région de la base du U ou du V , à partir de laquelle base les bras de console (18, 19) formant les branches du U ou du V sont guidés vers le bas jusqu'au corps d'essieu (2) de tellee sorte que la console de fixation (13) ainsi que le corps d'essieu (2) délimitent de manière annulaire l'espace libre (24) destiné à l'agencement de l'arbre d'entraînement (23).

4. Agencement d'essieu rigide selon l'une quelconque des revendications précédentes, **caractérisé en ce que** les bras de console (18, 19) sont courbés vers l'extérieur à partir de la région centrale longitudinale (9) du corps d'essieu (2).

5. Agencement d'essieu rigide selon l'une quelconque des revendications précédentes, **caractérisé en ce que** le corps d'essieu (2) est pourvu d'une région de bombement (6) dans une partie médiane de corps d'essieu (3) comprenant la région centrale longitudinale (9), de préférence est bombé vers le bas vu dans la direction de l'axe vertical du véhicule, et
**en ce que** le corps d'essieu (2) se prolonge dans les parties latérales de corps d'essieu (4, 5) par une région de transition de corps d'essieu (10, 11) se raccordant des deux côtés à la région de bombement (6), en particulier par une régions de transition de corps d'essieu (10, 11) s'détendant de manière inclinée ou courbée par rapport à la direction de l'axe vertical du véhicule et à la direction transversale du véhicule.

6. Agencement d'essieu rigide selon l'une quelconque des revendications précédentes, **caractérisé en ce que** les bras de console (18, 19) sont guidés jusqu'au corps d'essieu (2) à partir de la région de connexion de bras oscillant à plusieurs points (12) suivant un angle défini, de manière incliné vers l'extérieur, à l'écart de la région centrale longitudinale (9) du corps d'essieu (2).

7. Agencement d'essieu rigide selon les revendications 5 et 6, **caractérisé en ce que** les bras de console sont connectés sur les côtés opposés de la région centrale longitudinale (9) à la partie latérale de corps d'essieu (4, 5) respective et/ou dans la région de transition de corps d'essieu (10, 11) qui mène de la partie médiane de corps d'essieu (3) aux parties latérales de corps d'essieu (4, 5).

8. Agencement d'essieu rigide selon l'une quelconque des revendications précédentes, **caractérisé en ce que** les bras de console (18, 19), par leurs régions de connexion situées du côté du corps d' essieu, en particulier par leurs extrémité libres, suivent au moins dans des régions partielles la forme et/ou le contour du corps d'essieu (2), en particulier des parties latérales de corps d'essieu (4, 5) et/ou des régions de transition de corps d'essieu (10, 11) et s'y appliquent et y sont connectés dans une liaison d'appui plan.

9. Agencement d'essieu rigide selon l'une quelconque des revendications précédentes, **caractérisé en ce que** la région de connexion de bras oscillant à plusieurs points (12) située du côté de la console est réalisée d'un seul tenant avec la console de fixation (13) ou est formée par un composant séparé qui est relié fixement aux bras de console (18, 19), en particulier est replié par liaison de matière et/ou par force et/ou par engagement par complémentarité de formes.

10. Agencement d'essieu rigide selon l'une quelconque des revendications précédentes, **caractérisé en ce que** la région de connexion de bras oscillant à plusieurs points (12) située du côté de la console comprend et/ou supporte au moins un élément de raccordement, en particulier au moins une patte de raccordement (15), pour au moins un palier de bras oscillant, en particulier un palier en élastomère-métal.

11. Agencement d'essieu rigide selon les revendications 9 et 10, **caractérisé en ce que** la région de connexion de bras oscillant à plusieurs points (12) située du côté de la console comprend une région de support (14) de type plaque, sur laquelle est disposé l'au moins un élément de raccordement (15), en particulier l'au moins une patte de raccordement, les bras de console (18, 19) partant de la région de support (14), en particulier d'une plaque de support, et étant reliés fixement à celle-ci.

12. Agencement d'essieu rigide selon l'une quelconque des revendications précédentes, **caractérisé en ce que**, dans le cas d'un bras oscillant à trois points en tant que bras oscillant à plusieurs points, la région de connexion de bras oscillant à plusieurs points (12) située du côté de la console est réalisée de telle sorte que le point de connexion de bras oscillant unique se situe dans la région centrale longitudinale (9) de la console de fixation (13).

13. Agencement d'essieu rigide salon l'une quelconque des revendications précédentes, **caractérisé en ce que**, dans le cas d'un bras oscillant à quatre points en tant que bras oscillant à plusieurs points, la région de connexion de bras oscillant à plusieurs points (12) située du côté de la console est réalisée de telle sorte que les deux points de connexion de bras oscillant situés du côté de la console et formés de préférence par deux éléments de raccordement ou pattes de raccordement espacé(e)s soient disposés symétriquement par rapport à la région centrale longitudinale (9).

14. Agencement d'essieu rigide selon l'une quelconque des revendications précédentes, **caractérisé en ce que** les bras de console (18, 19) de la console de fixation (13) sont essentiellement symétriques par rapport à la région centrale longitudinale (9) et/ou sont réalisés essentiellement sous forme de parties identiques.

15. Agencement d'essieu rigide selon l'une quelconque des revendications 4 à 14, **caractérisé en ce que** le corps d'essieu (2) est un corps d'essieu (2) en plusieurs pièces, dans lequel la partie médiane de corps d'essieu (3) comprenant les régions de transition de corps d'essieu (10, 11) est fabriquée en tant que composant séparé et est reliée aux parties latérales de corps d'essieu (4, 5) fabriquées également au moyen de composants séparés.

16. Agencement d'essieu rigide selon l'une quelconque des revendications précédentes, **caractérisé en ce que** l'essieu rigide (1) réalisé éventuellement sous forme d'essieu relevable est un essieu poussé situé devant un essieu moteur ou un essieu traîné disposé derrière un essieu moteur d'un véhicule utilitaire, en particulier d'un poids-lourd ou d'un autobus.

17. Console de fixation pour un agencement d'essieu rigide selon l'une quelconque des revendications précédentes.
